# EUROPEAN PATENT APPLICATION

(11) **EP 4 741 968 A1**
(43) Date of publication of application: **13.05.2026**
(21) Application number: 24858555.6
(22) Date of filing: 27.08.2024
(51) Int. Cl.: G05B 23/02

(54) **CONTROL METHOD AND APPARATUS**

(30) Priority: 28.08.2023 CN 202311087181
(71) Applicant: Shenzhen Yinwang Intelligent Technologies Co., Ltd., Shenzhen, Guangdong 518110 (CN)
(72) Inventor: ZHONG, Steven Yin, Shenzhen, Guangdong 518129 (CN); XIE, Yujuan, Shenzhen, Guangdong 518129 (CN); ZHANG, Zuoqiang, Shenzhen, Guangdong 518129 (CN); JIANG, Zhichao, Shenzhen, Guangdong 518129 (CN); WEI, Zhuo, Shenzhen, Guangdong 518129 (CN); FU, Tianfu, Shenzhen, Guangdong 518129 (CN)
(74) Representative: Gill Jennings & Every LLP
(86) International application number: PCT/CN2024/114733
(87) International publication number: WO 2025/045019

(57) **Abstract**

This application provides a control method and apparatus, applied to a diagnosis system. The diagnosis system includes a first logical port and a second logical port. The first logical port is a logical port of a first network of a transportation means, and the second logical port is a logical port of a second network of the transportation means. The method includes: obtaining first configuration information; and controlling an enabled/disabled state of the first logical port and/or an enabled/disabled state of the second logical port based on the first configuration information. In this way, when an electronic device is in different scenarios, an enabled/disabled state of a logical port of the diagnosis system can be dynamically controlled, to minimize access permission of the logical port in different scenarios, so that security of a diagnosis port is improved.

## Description

This application claims priority to Chinese Patent Application No. 202311087181.1, filed with the China National Intellectual Property Administration on August 28, 2023 and entitled "CONTROL METHOD AND APPARATUS", which is incorporated herein by reference in its entirety.

### TECHNICAL FIELD

Embodiments of this application relate to the field of information technologies, and in particular, to a control method and apparatus.

### BACKGROUND

With intelligent development of electronic devices, many electronic devices require connection to external diagnosis devices through their diagnosis ports for diagnosis operations. For example, as vehicles are complex and intelligent transportation tools, efficient and accurate vehicle maintenance increasingly relies on an intelligent vehicle diagnosis and detection system. In other words, on-board diagnostics (on-board diagnostics, OBD) has become an indispensable part of vehicles.

However, when an external diagnosis device is connected to the diagnosis port of the electronic device, the diagnosis port of the electronic device may be one of main ports exploited by hackers. This potentially compromises operational security of the electronic device. For example, for a vehicle, an OBD port is a vulnerable port that is easily exploited by hackers.

In an overall lifecycle of the electronic device, different users at different stages have different security requirements and permission requirements for the diagnosis port of the electronic device. For example, for vehicles, a vehicle production-line environment is relatively secure and less susceptible to attacks, and manufacturers require higher-level permission to configure and calibrate components; and in a user use scenario after vehicles are delivered from factories, to ensure vehicle security, user permission is lower.

In view of this, how to improve security of a diagnosis system of the electronic device in the different phases of the lifecycle of the electronic device becomes an urgent problem to be resolved.

### SUMMARY

Embodiments of this application provide a control method and apparatus, to dynamically control an enabled/disabled state of a logical port of a diagnosis system when an electronic device in different scenarios, so as to minimize access permission of the logical port in different scenarios, thereby improving security of a diagnosis port.

According to a first aspect, a control method is provided. The method is applied to a diagnosis system of a transportation means, where the diagnosis system includes a first logical port and a second logical port, the first logical port is a logical port of a first network of the transportation means, and the second logical port is a logical port of a second network of the transportation means. The method includes: obtaining first configuration information; and controlling an enabled/disabled state of the first logical port and/or an enabled/disabled state of the second logical port based on the first configuration information.

In the foregoing technical solution, the enabled/disabled states of the first logical port and the second logical port in the diagnosis system are controlled by using the first configuration information. This helps implement flexible control of the logical ports of the first network and the second network in different phases of a lifecycle of the transportation means, so that minimum permission and maximum security are implemented.

With reference to the first aspect, in some implementations of the first aspect, the first configuration information includes a diagnosis authorization file, the diagnosis authorization file includes a first field, and the obtaining the first configuration information includes: receiving the diagnosis authorization file; and the controlling the enabled/disabled state of the first logical port and/or the enabled/disabled state of the second logical port based on the first configuration information includes: when the first field is a first value, controlling the first logical port and the second logical port to be in an enabled state; or when the first field is a second value, controlling the first logical port and the second logical port to be in a disabled state.

It should be understood that a scenario in which the diagnosis authorization file is received may be a scenario in which an operation like writing or reading needs to be performed through an OBD when the transportation means is in a device production factory, when the transportation means is in a road test phase or in repair, or the like.

In the foregoing technical solution, the logical port of the diagnosis system of the transportation means is dynamically enabled or disabled by using the authorization file. This ensures security and flexibly supports development of a diagnostic service in a special scenario. For example, when the transportation means is in a production process, the logical ports of the first network and the second network are configured to be in an enabled state, to facilitate production and manufacturing. Compared with a same protection manner used for a port corresponding to the diagnosis system of the transportation means in any scenario, the solution of this application can be used to control the enabled/disabled state of the logical port more flexibly according to specific scenarios in which the transportation means is located.

With reference to the first aspect, in some implementations of the first aspect, the diagnosis authorization file further includes a second field, and before the controlling the enabled/disabled state of the first logical port and/or the enabled/disabled state of the second logical port based on the first configuration information, the method further includes: determining, based on the second field, that the diagnosis authorization file is valid.

In the foregoing technical solution, before the enabled/disabled state of the OBD logical port is dynamically controlled, a function of dynamically configuring the OBD logical port is enabled through validity of the diagnosis authorization file. Compared with a case in which currently all OBD ports are in an enabled state and only weak security protection is performed by using a trustlist or an authentication manner, in this solution, security of dynamically configuring the OBD logical port can be further improved.

With reference to the first aspect, in some implementations of the first aspect, the first configuration information includes a solidification flag, the solidification instruction includes a third field, and the obtaining the first configuration information includes: obtaining the solidification flag after the transportation means is powered on; and the controlling the enabled/disabled state of the first logical port and/or the enabled/disabled state of the second logical port based on the first configuration information includes: controlling, based on the third field, the first logical port and the second logical port to be in a disabled state.

With reference to the first aspect, in some implementations of the first aspect, the method further includes: storing the solidification flag after the transportation means is delivered from a factory.

In the foregoing technical solution, before the solidification flag takes effect, each time the transportation means is powered on, the OBD logical port may be in an enabled state, so that a diagnosis process can be performed when the transportation means is on a production line. If the solidification flag takes effect, the OBD logical port may be in a disabled state each time the transportation means is powered on, so that security of the OBD after the transportation means is delivered from the factory may be improved. Even after the solidification flag takes effect, if the transportation means has not completed the diagnosis process on the production line, the OBD logical port may be enabled by using the diagnosis authorization file. In this way, flexibility of configuring the OBD logical port during vehicle production and before vehicle delivery is improved.

With reference to the first aspect, in some implementations of the first aspect, the diagnosis system further includes an authentication logical port, the first configuration information includes a first authentication request, and the obtaining the first configuration information includes: receiving, by using the authentication logical port, the first authentication request sent by an external diagnosis device, where the authentication logical port is used for identity authentication; and the controlling the enabled/disabled state of the first logical port and/or the enabled/disabled state of the second logical port based on the first configuration information includes: when the external diagnosis device is successfully authenticated by using the first authentication request, controlling the second logical port to switch from a disabled state to an enabled state.

In the foregoing technical solution, when the transportation means needs to be repaired in a 4S shop after delivery from a factory, if the authentication logical port successfully authenticates the authentication request initiated by the diagnosis device, the first device may enable the second logical port. The enabled/disabled state of the second logical port is configured through the authentication logical port, to prevent an unauthorized device from enabling the second logical port. In this way, the second logical port can be conditionally enabled in a 4S shop repair scenario, so that security of the on-board diagnostics is ensured.

With reference to the first aspect, in some implementations of the first aspect, the diagnosis system is an on-board diagnostics, the first network is a controller area network, the second network is an automotive Ethernet, the first logical port is a logical port of the controller area network, and the second logical port is a logical port of the automotive Ethernet.

According to a second aspect, a control apparatus is provided. The apparatus is used in a diagnosis system of a transportation means. The diagnosis system includes a first logical port and a second logical port. The first logical port is a logical port of a first network of the transportation means, and the second logical port is a logical port of a second network of the transportation means. The apparatus includes an obtaining unit and a processing unit. The obtaining unit is configured to obtain first configuration information. The processing unit is configured to control an enabled/disabled state of the first logical port and/or an enabled/disabled state of the second logical port based on the first configuration information.

It should be understood that for technical effects related to the solution in the second aspect, reference may be made to the first aspect. Details are not described herein again.

With reference to the second aspect, in some implementations of the second aspect, the first configuration information includes a diagnosis authorization file, and the diagnosis authorization file includes a first field. The obtaining unit is specifically configured to receive the diagnosis authorization file. The processing unit is specifically configured to: when the first field is a first value, control the first logical port and the second logical port to be in an enabled state; or when the first field is a second value, control the first logical port and the second logical port to be in a disabled state.

With reference to the second aspect, in some implementations of the second aspect, the diagnosis authorization file further includes a second field, and the processing unit is further configured to determine, based on the second field, that the diagnosis authorization file is valid.

With reference to the second aspect, in some implementations of the second aspect, the first configuration information includes a solidification flag, and the solidification instruction includes a third field. The obtaining unit is specifically configured to obtain the solidification flag after the transportation means is powered on. The processing unit is specifically configured to control, based on the third field, the first logical port and the second logical port to be in a disabled state.

With reference to the second aspect, in some implementations of the second aspect, the apparatus further includes a storage unit, and after the transportation means is delivered from a factory, the storage unit is configured to store the solidification flag.

With reference to the second aspect, in some implementations of the second aspect, the diagnosis system further includes an authentication logical port, and the first configuration information includes a first authentication request; the obtaining unit is specifically configured to receive, through the authentication logical port, the first authentication request sent by an external diagnosis device, where the authentication logical port is used for identity authentication; and the processing unit is specifically configured to: when the external diagnosis device is successfully authenticated by using the first authentication request, control the second logical port to switch from a disabled state to an enabled state.

With reference to the second aspect, in some implementations of the second aspect, the diagnosis system is an on-board diagnostics, the first network is a controller area network, the second network is an automotive Ethernet, the first logical port is a logical port of the controller area network, and the second logical port is a logical port of the automotive Ethernet.

According to a third aspect, a control method is provided. The method is applied to a diagnosis system of a transportation means, the diagnosis system includes a first logical port, and the first logical port is a logical port of an internal local area network of the transportation means. The method includes: obtaining first configuration information; and controlling an enabled/disabled state of the first logical port based on the first configuration information.

In the foregoing technical solution, the enabled/disabled state of the logical port of the internal local area network of the transportation means is controlled by using the configuration information. This can protect security of the internal local area network of the transportation means, and help flexibly enable or disable the logical port in different scenarios to meet function requirements in the different scenarios.

With reference to the third aspect, in some implementations of the third aspect, the diagnosis system further includes a second logical port, the second logical port is a logical port of an Ethernet of the transportation means, and the method further includes: controlling an enabled/disabled state of the second logical port based on the first configuration information.

With reference to the third aspect, in some implementations of the third aspect, the first configuration information includes a diagnosis authorization file, the diagnosis authorization file includes a first field, and the obtaining the first configuration information includes: receiving the diagnosis authorization file; and the controlling the enabled/disabled state of the first logical port and/or the enabled/disabled state of the second logical port based on the first configuration information includes: when the first field is a first value, controlling the first logical port and the second logical port to be in an enabled state; or when the first field is a second value, controlling the first logical port and the second logical port to be in a disabled state.

It should be understood that a scenario in which the diagnosis authorization file is received may be a scenario in which a write operation needs to be performed through an OBD when the transportation means is in a device production factory, when the transportation means is in a road test phase, or the like.

With reference to the third aspect, in some implementations of the third aspect, the diagnosis authorization file further includes a second field, and before the controlling the enabled/disabled state of the first logical port and/or the enabled/disabled state of the second logical port based on the first configuration information, the method further includes: determining, based on the second field, that the diagnosis authorization file is valid.

With reference to the third aspect, in some implementations of the third aspect, the first configuration information includes a solidification flag, the solidification instruction includes a third field, and the obtaining the first configuration information includes: obtaining the solidification flag after the transportation means is powered on; and the controlling the enabled/disabled state of the first logical port and/or the enabled/disabled state of the second logical port based on the first configuration information includes: controlling, based on the third field, the first logical port and the second logical port to be in a disabled state.

With reference to the third aspect, in some implementations of the third aspect, the method further includes: storing the solidification flag after the transportation means is delivered from a factory.

With reference to the third aspect, in some implementations of the third aspect, the diagnosis system further includes an authentication logical port, the first configuration information includes a first authentication request, and the obtaining the first configuration information includes: receiving, through the authentication logical port, the first authentication request sent by an external diagnosis device, where the authentication logical port is used for identity authentication; and the controlling the enabled/disabled state of the first logical port and/or the enabled/disabled state of the second logical port based on the first configuration information includes: when the external diagnosis device is successfully authenticated by using the first authentication request, controlling the second logical port to switch from a disabled state to an enabled state.

With reference to the third aspect, in some implementations of the third aspect, the diagnosis system is an on-board diagnostics, the first network is a controller area network, the second network is an automotive Ethernet, the first logical port is a logical port of the controller area network, and the second logical port is a logical port of the automotive Ethernet.

According to a fourth aspect, a control apparatus is provided. The apparatus includes a processor and a memory. The memory is configured to store a computer program, and the processor executes the computer program stored in the memory, so that the apparatus performs the method according to any one of the possible implementations of the first aspect, or the apparatus performs the method according to any one of the possible implementations of the third aspect.

According to a fifth aspect, a transportation means is provided. The transportation means includes the apparatus according to any one of the possible implementations of the second aspect.

In some possible implementations, the transportation means is a vehicle.

According to a sixth aspect, a computer program product is provided. The computer program product includes computer program code. When the computer program code is run on a computer, the computer is enabled to perform the method according to any one of the possible implementations of the first aspect or perform the method according to any one of the possible implementations of the third aspect.

It should be noted that all or some of the computer program code may be stored in a first storage medium. The first storage medium may be packaged together with a processor, or may be packaged separately from a processor. This is not specifically limited in embodiments of this application.

According to a seventh aspect, a computer-readable medium is provided. The computer-readable medium stores program code. When the computer program code is run on a computer, the computer is enabled to perform the method according to any one of the possible implementations of the first aspect or perform the method according to any one of the possible implementations of the third aspect.

According to an eighth aspect, an embodiment of this application provides a chip system. The chip system includes a processor, configured to invoke a computer program or computer instructions stored in a memory, to enable the processor to perform the method according to any one of the possible implementations of the first aspect or enable the processor to perform the method according to any one of the possible implementations of the third aspect.

With reference to the eighth aspect, in a possible implementation, the processor is coupled to the memory through an interface.

With reference to the eighth aspect, in a possible implementation, the chip system further includes the memory, and the memory stores the computer program or the computer instructions.

### BRIEF DESCRIPTION OF DRAWINGS

FIG. 1 is a diagram of an OBD physical port according to an embodiment of this application;
FIG. 2 is a diagram of a vehicle-cloud system according to an embodiment of this application;
FIG. 3 is a schematic flowchart of a control method according to an embodiment of this application;
FIG. 4 is a diagram of diagnosis agent configuration interaction according to an embodiment of this application;
FIG. 5 is a schematic flowchart of diagnosis agent configuration according to an embodiment of this application;
FIG. 6 is a diagram of diagnosis process interaction when a vehicle is on a production line according to an embodiment of this application;
FIG. 7 is a schematic flowchart of logical port configuration according to an embodiment of this application;
FIG. 8 is a schematic flowchart of logical port configuration interaction in a 4S shop repair scenario according to an embodiment of this application;
FIG. 9 is a schematic flowchart of logical port configuration in a return-to-factory repair scenario according to an embodiment of this application;
FIG. 10 is a diagram of a status change of an in-vehicle logical port in time domain in different scenarios according to an embodiment of this application;
FIG. 11 is a block diagram of a control apparatus 1100 according to an embodiment of this application; and
FIG. 12 is a block diagram of a structure of a control apparatus 1200 according to an embodiment of this application.

### DESCRIPTION OF EMBODIMENTS

For ease of understanding embodiments of this application, the following points are described.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of' means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including a single item (piece) or any combination of a plurality of items (pieces). For example, at least one of a, b, and c may represent a, or b, or c, or a and b, or a and c, or b and c, or a, b, and c. Each of a, b, and c may be in a singular form or a plural form.

Third, in this application, "first", "second", and various numerical numbers (for example, #1 and #2) are merely used for distinguishing for ease of description, but are not intended to limit the scope of embodiments of this application, for example, are intended to differentiate between different logical ports but not to describe a specific order or sequence. It should be understood that objects described in this way are interchangeable in an appropriate circumstance, so that a solution other than embodiments of this application can be described.

Fourth, in this application, descriptions such as "when...", "in a case of...", and "if" all mean that corresponding processing is performed in a specific objective situation, and are not intended to limit time. The descriptions do not mean that a determining action is required during implementation, and do not mean any other limitation. In addition, it does not mean that a determining action after these condition conjunctions is the only condition for implementing the result, and other additional conditions may be included to implement the result.

Fifth, in this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in this application, "indicate" may include "directly indicate" and "indirectly indicate". When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, "store" may refer to being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

The solutions in embodiments of this application may be applied to a transportation means with a diagnosis port and a diagnosis function, for example, on-board diagnostics, flying car, motorcycles, or airplanes, or may be applied to electronic devices with a diagnosis port and a diagnosis function, for example, industrial computers, embedded devices, or smart homes. This is not limited in embodiments of this application. The following provides detailed descriptions by using an on-board diagnostics as an example.

The transportation means in this application may include road transportation means, water transportation means, air transportation means, industrial devices, agricultural devices, entertainment devices, or the like. For example, a carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, or a toy vehicle. A type of the transportation means is not specifically limited in embodiments of this application. For another example, the transportation means may be transportation like an aircraft or a ship.

With continuous development of automotive electronics and intelligent technologies, an automobile has gradually become a complex and intelligent vehicle, and efficient and accurate vehicle maintenance increasingly depends on an intelligent vehicle diagnosis and detection system.

The following describes technical solutions of embodiments in this application with reference to accompanying drawings.

For ease of understanding embodiments of this application, technical terms in embodiments of this application are first briefly described.

### 1. On-board diagnostics OBD

The OBD is a system disposed in a vehicle to monitor operational statuses of the vehicle and report exceptions. When a subsystem of the vehicle malfunctions, a fault code and a reminder signal are generated to notify a vehicle owner and a vehicle manufacturer for diagnostic repair.

For a second-generation on-board diagnostics, the Society of Automotive Engineers specifies OBD-II. The OBD-II standard specifies a type of a diagnosis connector (for example, a diagnosis tool) and pin arrangement of the diagnosis connector, available electrical signal protocols, message transmission formats, vehicle parameters, and a list of fault code list.

OBD physical ports include a physical port supporting a controller area network (controller area network, CAN) bus and a physical port supporting an automotive Ethernet (automotive Ethernet).

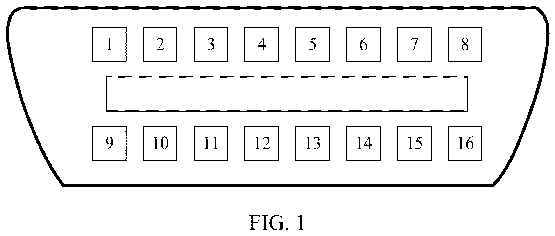

FIG. 1 is a diagram of an OBD physical port according to an embodiment of this application. FIG. 1 shows a standard definition of the OBD physical port in diagnostic communication over internet protocol (diagnostic communication over internet protocol, DoIP).

As shown in FIG. 1, a port #2 and a port #10 are used for an SAE J1850 bus; a port #4 and a port #5 are used for grounding; a port #6 and a port #14 are used for a CAN bus; a port #7 and a port #15 are used for an ISO 9141 K line and an L line; a port #16 is used for power supply; a port #3, a port #11, a port #12, and a port #13 are used for an automotive Ethernet; a port #1 and a port #9 are ports customized by an automobile manufacturer; and a port #8 is used for an Ethernet activation identifier.

### 2. Diagnostic communication over internet protocol DoIP

DoIP is a transmission protocol for transmitting diagnosis data of a unified diagnostic service (unified diagnostic services, UDS) on an Ethernet.

### 3. Unified diagnostic service protocol

The UDS protocol is a standardization specification for diagnostic services, for example, types of instructions sent to an electronic control unit (electronic control unit, ECU) when fault code are read, and types of instructions sent to the ECU when data streams are read.

### 4. Transport layer security (transport layer security, TLS)

TLS is an encryption protocol that provides secure communication over computer networks. TLS provides security features such as confidentiality, authentication, data integrity, and forward secrecy between two or more communicating computer applications are provided, to prevent communication from being eavesdropped and tampered with.

Currently, with development of automotive electronic technologies, there are more types and quantities of ECUs in vehicles, and routine maintenance of vehicles cannot be separated from an OBD system. However, because an OBD physical port of the OBD system can be connected to an external device, the OBD physical port is easily exploited and attacked by hackers.

### 5. Vehicle identification number (vehicle identification number, VIN)

The vehicle identification number includes information, for example, a manufacturer, a year, a model, a body type, and an assembly position of a vehicle. The vehicle identification number may be understood as an identity number of the vehicle.

The OBD physical ports include the CAN bus physical port and the automotive Ethernet physical port. Therefore, when an external device is connected to the OBD physical port to access a vehicle-mounted device, the OBD physical port becomes one of main interfaces exploited by the hacker. This greatly affects security of the vehicle-mounted device.

Currently, some solutions are used to ensure secure running of the OBD system. The following briefly describes the solutions.

First, a trustlist mechanism applied to the OBD system. A trustlist is set to limit an unrelated vehicle control instruction. For example, based on a trustlist of security identifiers (security identifier, SID), only UDS-related instructions are allowed to run in a vehicle, and running of UDS-unrelated instructions is limited. In a solution based on the trustlist mechanism, all OBD ports are in an enabled state, and after the vehicle is delivered from a factory, the trustlist mechanism is fixed in software. After an external device is connected to the OBD port, the trustlist mechanism can limit a vehicle control instruction that is not in the trustlist, to protect secure communication of the vehicle to a specific extent. However, in different scenarios or in different phases of a vehicle lifecycle, content of the trustlist mechanism cannot be added or deleted or permission of a trustlist service cannot be changed. This leads to a case in which port access permission is high in some scenarios, and a security risk is increased. For example, the related instruction obtained after the UDS is complete may be performing a read/write operation through the OBD port, and this permission may be excessively high for a CAN bus communication device.

Second, a security access service applied to the OBD system. For a high-risk UDS, for example, writing configuration words, flashing code, and controlling routines, there may be security issues, and therefore unauthorized operations need to be prevented by using a security access service (for example, UDS 27). UDS 27 is used to perform access control on some sensitive UDS services. The sensitive UDS service can be performed only after the UDS 27 service is complete. In other words, the UDS 27 service is an authentication based on a challenge-response mechanism. In this solution, all the OBD ports are also in an enabled state, unauthorized operations are prevented only by using the security access service, and permission on the sensitive service after the UDS 27 service is complete cannot be changed in different scenarios. This increases a security risk.

Third, TLS access authentication applied to the OBD system. It is determined, based on a vehicle mode, whether an external device connected to an OBD physical port needs to be authenticated. The vehicle mode includes a factory mode and a user mode. In the factory mode, a TLS authentication function is disabled, and a diagnosis device directly performs communication diagnosis through the OBD physical port without TLS authentication. In the user mode, the TLS authentication function is enabled. The diagnosis device only needs to undergo the TLS authentication and maintain a connection after the authentication succeeds, to perform communication diagnosis through the OBD physical port. In this solution, regardless of whether the factory mode or the user mode is used, all the OBD ports are in the enabled state, and only in the user mode, the OBD ports can perform connection and communication after the TLS authentication succeeds. Although the factory mode and the user mode are distinguished in this solution, for the user mode, user permission is fixed and cannot be changed after the TLS authentication succeeds, and TLS authentication is performed only on an Ethernet port in the OBD ports, and cannot be applied to a CAN port. Therefore, permission in the user mode in this solution is high, and a security requirement in different scenarios cannot be met.

Fourth, certificate-based authentication and permission management applied to the OBD system. A certificate is preconfigured for a diagnosis device connected to an OBD port, and the diagnosis device is authenticated with a vehicle through a certificate. The vehicle grants corresponding diagnosis permission to the diagnosis device based on a certificate type. In this solution, the certificate type of a user is fixed, and correspondingly, the permission cannot be adjusted. Therefore, this solution cannot meet a security requirement in different scenarios.

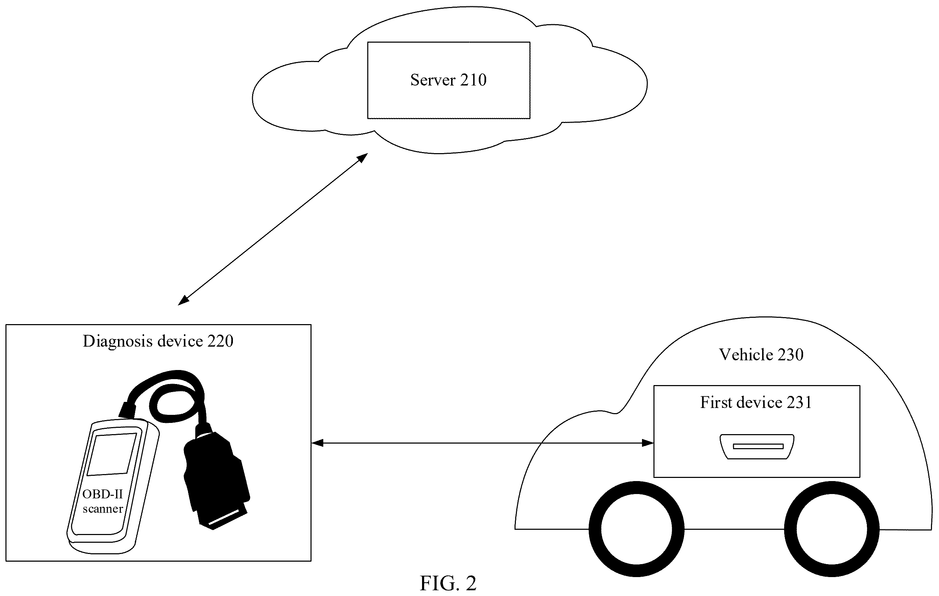

To resolve the foregoing problems, embodiments of this application provide a control method and apparatus. The following provides detailed descriptions with reference to FIG. 2 to FIG. 12.

FIG. 2 is a diagram of a vehicle-cloud system according to an embodiment of this application.

As shown in FIG. 2, the vehicle-cloud system includes a server 210, a diagnosis device 220, and a vehicle 230. When a fault occurs in the vehicle and diagnosis is required, the diagnosis device 220 is directly connected to a first device 231 of the vehicle 230 through an OBD physical port. In other words, the diagnosis device 220 is plug-connected to the OBD physical port on the first device 231 via an OBD connector. The first device 231 is a device in which the OBD physical port is located, for example, a cockpit domain controller (cockpit domain controller, CDC), a vehicle dynamic controller (vehicle dynamic controller, VDC), or a vehicle integration unit (vehicle integration unit, VIU). This is not limited in this embodiment of this application.

It should be understood that the foregoing authorization file may be received by the diagnosis device 220 from the server 210 in the cloud, and is used in a process of interaction with the first device 231 of the vehicle 230.

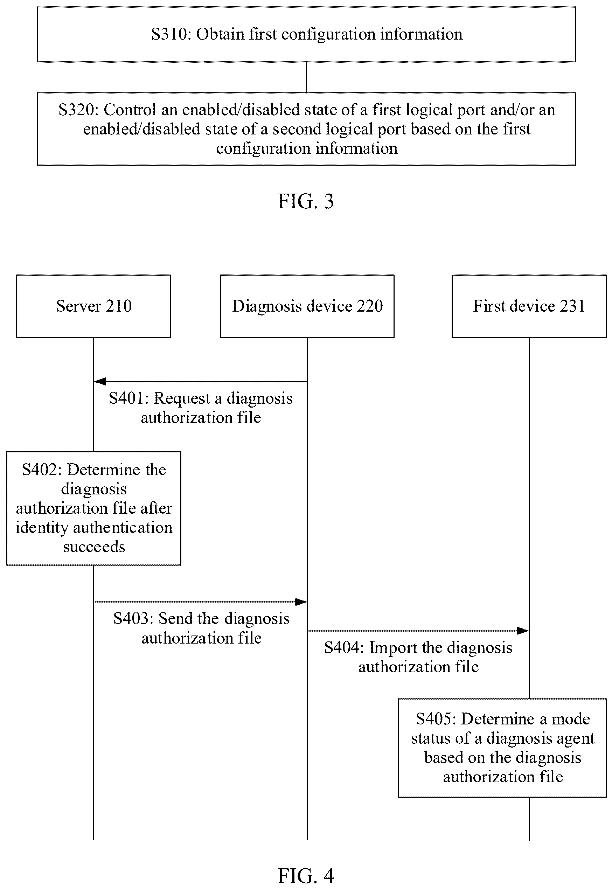

FIG. 3 is a schematic flowchart of a control method according to an embodiment of this application. The control method is applied to a diagnosis system of a transportation means. The diagnosis system includes a first logical port and a second logical port. The first logical port is a logical port of a first network of the transportation means, and the second logical port is a logical port of a second network of the transportation means.

S310: Obtain first configuration information.

In a possible implementation, the first configuration information includes a diagnosis authorization file, and a first device receives the diagnosis authorization file from an external diagnosis device.

In a possible implementation, the first configuration information includes a first authentication request, and a first device receives the first authentication request from an external diagnosis device.

In a possible implementation, the first configuration information includes a solidification flag, and a first device obtains the solidification flag from a storage device corresponding to the first device.

It should be understood that the storage device corresponding to the first device is a non-volatile memory. Therefore, when the first device is restarted or powered on again, the solidification flag stored in the storage device still exists.

S320: Control an enabled/disabled state of the first logical port and/or an enabled/disabled state of the second logical port based on the first configuration information.

It should be understood that when the transportation means is a vehicle, the diagnosis system of the transportation means may be an on-board diagnostics. The first network may be an internal local area network of the transportation means, and the second network may be an Ethernet of the transportation means. For example, the first network may be a CAN, a local interconnect network (local interconnect network, LIN), or the like. The second network may be an automotive Ethernet. Correspondingly, when the transportation means is the vehicle, the first logical port may be a logical port of a vehicle-mounted local area network, and the second logical port may be a logical port of an automotive Ethernet.

In a possible implementation, the enabled/disabled state of the first logical port and/or the enabled/disabled state of the second logical port is controlled based on a first field in the diagnosis authorization file.

For example, the first field may be represented by using one bit. When a bit value of the first field is a first value, the first logical port and the second logical port are controlled to be in an enabled state. When the bit value of the first field is a second value, the first logical port and the second logical port are controlled to be in a disabled state. A specific form of the first value or the second value is not limited in embodiments of this application. For example, the first value may be 0, and the second value may be 1.

For example, the first field may be represented by using two bits. When a value of a first bit in the first field is a third value, the first logical port is controlled to be in the enabled state. When the value of the first bit in the first field is a fourth value, the first logical port is controlled to be in the disabled state. When a value of a second bit in the first field is a fifth value, the second logical port is controlled to be in the enabled state. When the value of the second bit in the first field is a sixth value, the second logical port is controlled to be in the disabled state. In other words, in this example, the first field may control the first logical port and the second logical port separately by using an independent bit. Therefore, in this example, the enabled/disabled state of the first logical port does not need to be consistent with the enabled/disabled state of the second logical port.

In a possible implementation, when the external diagnosis device is successfully authenticated by using the first authentication request, the second logical port is controlled to switch from the disabled state to the enabled state.

In a possible implementation, the first logical port and the second logical port are controlled to be in the disabled state based on the solidification flag.

In the foregoing technical solution, the enabled/disabled states of the first logical port and the second logical port in the diagnosis system are controlled by using the first configuration information. This helps implement flexible control of the logical ports of the first network and the second network in different phases of a lifecycle of the transportation means, so that minimum permission and maximum security are implemented. For example, when the transportation means is on a production line, the first logical port and the second logical port may be controlled to be in the enabled state by using the configuration information, to facilitate production and manufacturing. For example, after the transportation means is delivered from a factory, the first logical port and the second logical port may be controlled to be in the disabled state by using the solidification flag, to ensure security of the transportation means.

The following uses a vehicle as an example for detailed description. The control method and apparatus provided in embodiments of this application are described in detail with reference to different scenarios, that is, the vehicle is in different phases of the lifecycle. It should be understood that in the following, "CAN logical port" represents the "first logical port", and "DoIP logical port" represents the "second logical port".

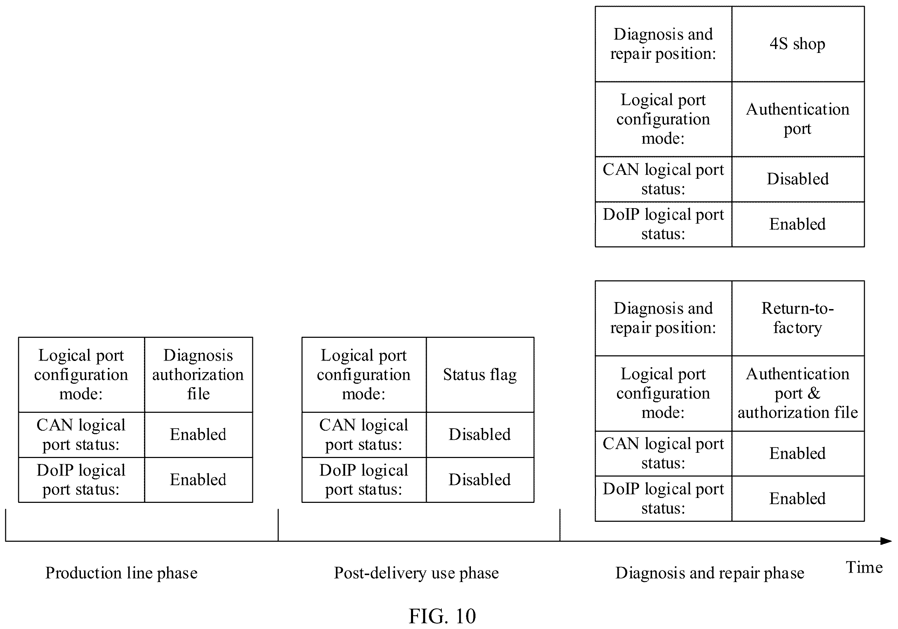

FIG. 10 is a diagram of a status change of an in-vehicle logical port in time domain in different scenarios according to an embodiment of this application.

As shown in FIG. 10, a lifecycle of a vehicle may be divided into a production line phase, a post-delivery use phase, and a repair phase with time changes.

In the production line phase, a CAN logical port and a DoIP logical port may be configured to be in an enabled state by using a diagnosis authorization file. In addition, a status flag stored in the vehicle may be set by using the diagnosis authorization file. The following provides detailed descriptions with reference to FIG. 4 to FIG. 7.

In the post-delivery use phase, each time a first device is powered on or restarted, the CAN logical port and the DoIP logical port may be configured to be in a disabled state by using the status flag stored in the vehicle.

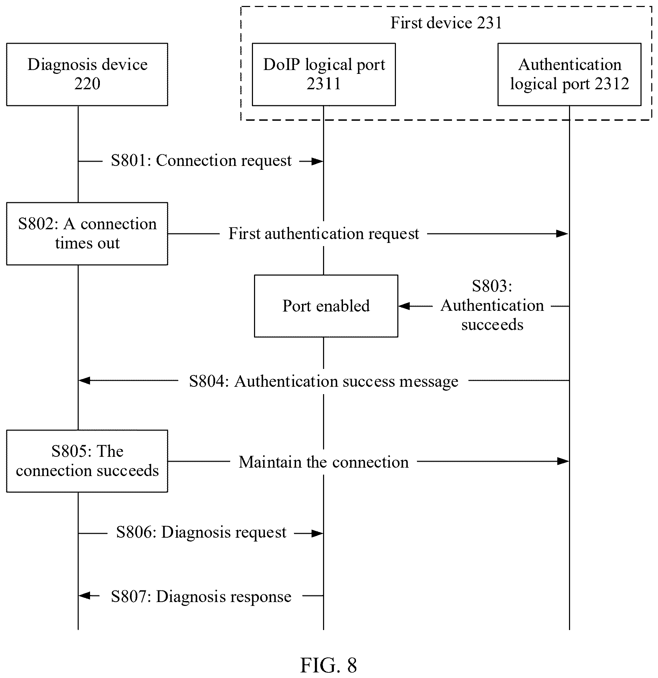

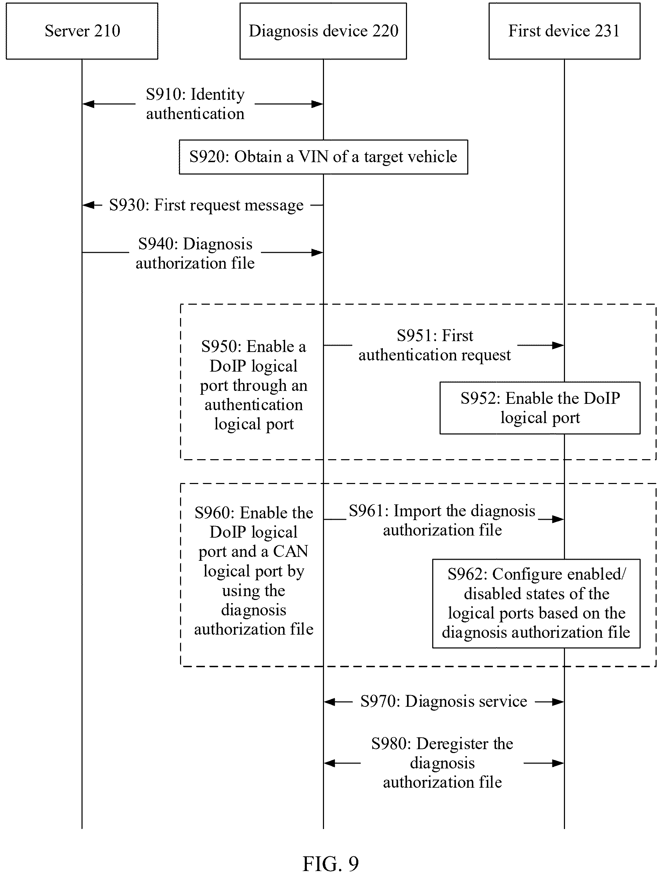

In the diagnosis and repair phase, an enabled/disabled state of the CAN logical port and an enabled/disabled state of the DoIP logical port are controlled to be in different control manners based on different diagnosis and repair positions. For example, during diagnosis and repair in a 4S shop, the DoIP logical port is enabled through an authentication port, the CAN logical port is kept in the disabled state, but regulation data related to vehicle supervision is allowed to be read through the CAN logical port. The following provides a detailed description with reference to FIG. 8. For another example, during return-to-factory diagnosis and repair, the CAN logical port and the DoIP logical port are controlled to be in the enabled state through the authentication port and the diagnosis authorization file. The following provides a detailed description with reference to FIG. 9.

FIG. 4 to FIG. 7 are example processes of logical port configuration when a vehicle is on a production line and is delivered from a factory.

FIG. 4 is a diagram of diagnosis agent configuration interaction according to an embodiment of this application.

S401: A diagnosis device sends a request message for requesting a diagnosis authorization file to a server.

It should be understood that the diagnosis device is an external diagnosis device connected to a first device through an OBD port.

In a possible implementation, after the diagnosis device is connected to the OBD port of the first device, the diagnosis device is triggered to send the request message for requesting the diagnosis authorization file to the server.

S402: The server performs identity authentication based on the request message, and determines the diagnosis authorization file after the identity authentication succeeds.

S403: The server sends the diagnosis authorization file to the diagnosis device.

S404: The diagnosis device imports the diagnosis authorization file into the first device.

S405: The first device determines a status of a diagnosis agent mode based on the diagnosis authorization file.

It should be understood that when the diagnosis agent mode is in an enabled state, it indicates that a dynamic configuration function of the OBD logical port is enabled; or when the diagnosis agent mode is in a disabled state, it indicates that the dynamic configuration function of the OBD logical port is disabled.

In a possible implementation, when the vehicle is powered on for the first time and receives the diagnosis authorization file, the diagnosis agent mode is enabled when a second field in the diagnosis authorization file indicates that the diagnosis authorization file is valid. The second field indicates whether the OBD logical port has the dynamic configuration function.

For example, the second field may be specifically "Authentication_file_valid". A specific value of the second field may be "0" or "1", or the second field may be "N" or "Y". A meaning of the diagnosis authorization file corresponding to the specific value of the second field is not limited in embodiments of this application. For example, when the second field is "0", the second field indicates that the diagnosis authorization file is valid; or when the second field is "1", the second field indicates that the diagnosis authorization file is valid.

Optionally, the second field of the diagnosis authorization file is stored in a memory corresponding to the first device. It should be understood that the memory is a non-volatile memory.

For example, the second field of the diagnosis authorization file is stored in the first device in a form of a status flag. For example, a decentralized identity (decentralized identity, DID) of a first status flag corresponding to the second field may be F152.

In a possible implementation, when the vehicle is not powered on or restarted for the first time, the first device may read the first status flag from the memory, and determine, based on the first status flag, whether a valid diagnosis authorization file has been received, to determine whether to enable the diagnosis agent mode.

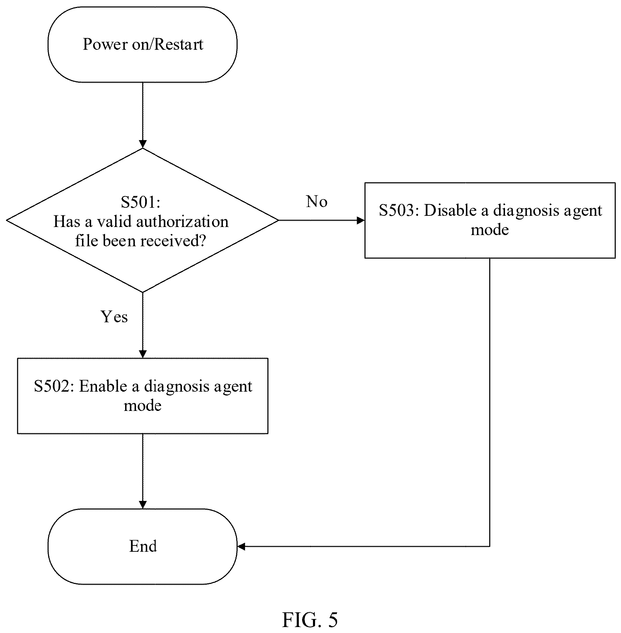

A specific procedure may be shown in FIG. 5. FIG. 5 is a schematic flowchart of diagnosis agent configuration according to an embodiment of this application. When the vehicle is not powered on or restarted for the first time, the following steps are performed.

S501: The first device determines whether a valid diagnosis authorization file has been received.

If the valid diagnosis authorization file has been received, in S502, the first device enables a diagnosis agent mode.

That the first device has received the valid diagnosis authorization file may be understood as that the first device has received the valid diagnosis authorization file before this power-on or restart, and the first device stores the first status flag indicating that the valid diagnosis authorization file has been received.

If no valid diagnosis authorization file is received, in S503, the first device disables a diagnosis agent mode.

That the first device has not received the valid diagnosis authorization file may be understood as that the first device has not received the valid diagnosis authorization file before this power-on or restart, and the first device does not store the first status flag indicating that the valid diagnosis authorization file has been received.

In the foregoing technical solution, before the enabled/disabled state of the OBD logical port is dynamically controlled, a function of dynamically configuring the OBD logical port is enabled through validity of the diagnosis authorization file. Compared with a case in which currently all OBD ports are in an enabled state and only weak security protection is performed by using a trustlist or an authentication manner, in this solution, security of dynamically configuring the OBD logical port can be further improved.

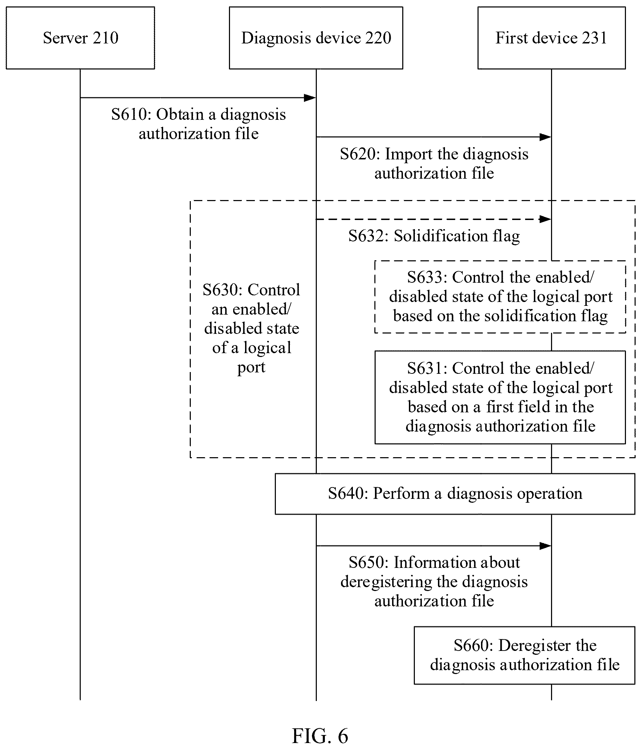

FIG. 6 is a diagram of diagnosis process interaction when a vehicle is on a production line according to an embodiment of this application. In the interaction diagram in FIG. 6, an example in which a first device, a diagnosis device, and a server are used as execution bodies of the interaction diagram is used to illustrate a corresponding method. However, the execution bodies of the interaction diagram are not limited in this application. For example, the first device in FIG. 6 may be a chip, a chip system, or a processor that supports the first device in implementing the corresponding method, or may be a logical module or software that can implement all or some functions of the first device. The diagnosis device in FIG. 6 may alternatively be a chip, a chip system, or a processor that supports the diagnosis device in implementing the corresponding method, or may be a logic module or software that can implement all or some functions of the diagnosis device. The server in FIG. 6 may alternatively be a chip, a chip system, or a processor that supports the server in implementing the corresponding method, or may be a logical module or software that can implement all or some functions of the server.

S610: The diagnosis device obtains a diagnosis authorization file from the server.

It should be understood that for a specific obtaining process, reference may be made to FIG. 4. Details are not described herein.

S620: The diagnosis device imports the diagnosis authorization file into the first device.

S630: The first device controls an enabled/disabled state of a first logical port and/or an enabled/disabled state of a second logical port of an OBD.

Specifically, the S630 may include steps S631 to S633.

S631: The first device controls enabled/disabled states of a CAN logical port and a DoIP logical port of the OBD based on a first field in the diagnosis authorization file.

In a possible implementation, the first field indicates that the enabled/disabled states of the CAN logical port and the DoIP logical port are both an enabled state or a disabled state. In other words, the first field indicates whether the CAN logical port and the DoIP logical port are in a security mode. The CAN logical port and the DoIP logical port in the security mode mean that the OBD logical port of the first device is in an untrusted environment, and needs to be in a security protection mode, that is, the CAN logical port and the DoIP logical port need to be disabled. The CAN logical port and the DoIP logical port in a non-security mode mean that the CAN logical port and the DoIP logical port of the first device are in a trusted environment, that is, the CAN logical port and the DoIP logical port may be enabled.

For example, the first field may be "Sec_acc_mode", and a specific value of the first field may be "0" or "1", or a specific value of the first field may be "N" or "Y". A meaning that is of the enabled/disabled state of the logical port and that is indicated by the specific value of the first field is not limited in embodiments of this application.

For example, when the first field is "0", the first field indicates that the enabled/disabled states of the CAN logical port and the DoIP logical port of the OBD remains unchanged. Alternatively, when the first field is "1", the first field indicates that the CAN logical port and the DoIP logical port of the OBD are configured to be in the enabled state.

In a possible implementation, the first field may indicate the enabled/disabled states of both the CAN logical port and the DoIP logical port, or may separately indicate the enabled/disabled state of the CAN logical port and the enabled/disabled state of the DoIP logical port. For example, the first field includes two bits, and each bit may separately indicate the enabled/disabled state of the CAN logical port and the enabled/disabled state of the DoIP logical port.

Optionally, after a valid diagnosis authorization file is received for the first time, the first field of the diagnosis authorization file is stored in a memory corresponding to the first device.

For example, the first field of the diagnosis authorization file is stored in the memory of the first device in a form of a flag. For example, a DID of a second status flag corresponding to the first field may be F151. It should be understood that the second status flag stored in the memory is used to record the current enabled/disabled state of the OBD logical port.

Optionally, in S632, the diagnosis device imports a solidification flag to the first device. After the first device is powered on again, the solidification flag is used to solidify the enabled/disabled states of the CAN logical port and the DoIP logical port to the disabled state.

Optionally, the solidification flag may be written into the memory in a form of a status flag, for example, written into a non-volatile memory. For example, a DID of a third status flag corresponding to the solidification flag may be F15B.

For example, the solidification flag may be "security_mode_solidified". A specific value of the solidification flag may be "0" or "1", or a specific value of the solidification flag may be "N" or "Y". A specific value of the solidification flag is not limited in embodiments of this application.

After the first device is powered on again, the solidification flag may be used to solidify the enabled/disabled states of the CAN logical port and the DoIP logical port to the disabled state. It may also be understood that the solidification flag indicates that the CAN logical port and the DoIP logical port need to be in the security mode. For a specific explanation of the security mode, refer to the foregoing descriptions. Details are not described herein again.

Optionally, in S633, after the first device is powered on again or restarted, the first device configures the enabled/disabled states of the CAN logical port and the DoIP logical port to the disabled state based on the solidification flag.

It should be understood that if the first device of the vehicle is not restarted after receiving the solidification flag, the solidification flag does not take effect. In this case, the CAN logical port and the DoIP logical port of the first device may be in the enabled state.

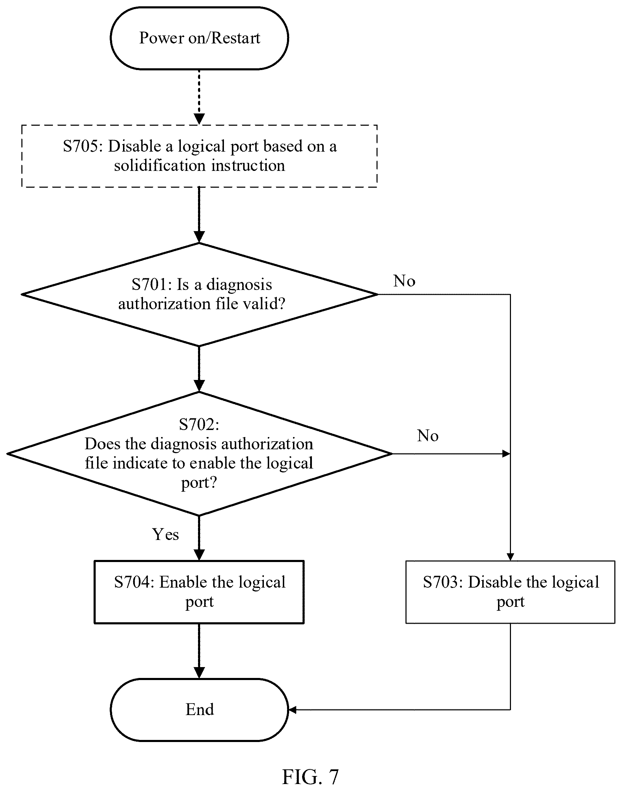

Steps S631 to S633 may be applied to a port configuration process before the vehicle is delivered from a factory. Details are described below with reference to FIG. 7.

S640: When the CAN logical port and the DoIP logical port are in the enabled state, the diagnosis device performs a diagnosis operation on the first device.

S650: After the diagnosis operation is completed, the diagnosis device imports, to the first device, a deregistration instruction for deregistering the diagnosis authorization file.

S660: The first device deregisters the diagnosis authorization file based on the deregistration instruction.

In a possible implementation, the first device sets, based on the deregistration instruction, the first status flag stored in the first device to an invalid value.

For example, the first status flag whose DID is F152 may be set to 0.

Optionally, within first duration, the CAN logical port and the DoIP logical port are in the enabled state, and the diagnosis device performs the diagnosis operation on the first device. The first duration may be preset.

Optionally, after the first duration expires, the CAN logical port and the DoIP logical port are in the disabled state, and the diagnosis device cannot perform the diagnosis operation on the first device.

For example, the first duration may be set to two hours. Within two hours, the CAN logical port and the DoIP logical port are in the enabled state, and the diagnosis device performs the diagnosis operation on the first device. After two hours, the CAN logical port and the DoIP logical port are in the disabled state, and the diagnosis device cannot perform the diagnosis operation on the first device.

FIG. 7 is a schematic flowchart of logical port configuration according to an embodiment of this application. After a vehicle is powered on or restarted, the following steps are performed.

S701: The first device determines whether a diagnosis authorization file imported from a diagnosis device is valid.

Specifically, the first device determines, based on a second field in the diagnosis authorization file, whether the diagnosis authorization file is valid.

When the diagnosis authorization file is invalid, in S703, the first device disables a CAN logical port and a DoIP logical port.

When the diagnosis authorization file is valid, in S702, whether the diagnosis authorization file indicates to enable the CAN logical port and the DoIP logical port is determined.

In a possible implementation, the first device determines, based on a first field in the diagnosis authorization file, whether to enable the CAN logical port and the DoIP logical port.

When the diagnosis authorization file is valid, and the diagnosis authorization file indicates to enable the logical port, in S704, the first device enables the CAN logical port and the DoIP logical port.

When the diagnosis authorization file is valid, and the diagnosis authorization file indicates not to enable the logical port, in S703, the first device disables the CAN logical port and the DoIP logical port.

Optionally, after the vehicle is powered on or restarted and before S701 is performed, in S705, the first device disables the logical port based on a solidification flag.

It should be understood that, if the first device has obtained the solidification flag and is restarted or powered on before a diagnosis process is completed on a production line, the CAN logical port and the DoIP logical port are in a disabled state. In this case, the first device may further enable the CAN logical port and the DoIP logical port by using the diagnosis authorization file. After the diagnosis process is completed on the production line and the vehicle is delivered from a factory, the first device may read the solidification flag to disable the CAN logical port and the DoIP logical port in one click.

A bold procedure shown in FIG. 7 is a procedure of enabling the CAN logical port and the DoIP logical port before the vehicle is delivered from the factory, and a non-bold procedure shown in FIG. 7 is a procedure of disabling the CAN logical port and the DoIP logical port before the vehicle is delivered from the factory.

In the foregoing technical solution, before the solidification flag takes effect, each time the vehicle is powered on, the OBD logical port may be in the enabled state, so that the diagnosis process can be performed when the vehicle is on the production line. After the solidification flag takes effect, the OBD logical port may be in the disabled state each time the vehicle is powered on, so that security of the OBD after the vehicle is delivered from the factory may be improved. Even after the solidification flag takes effect, if the vehicle has not completed the diagnosis process on the production line, the OBD logical port may be enabled by using the diagnosis authorization file. In this way, flexibility of configuring the OBD logical port during vehicle production and before vehicle delivery is improved.

The foregoing may be a process of dynamically configuring the CAN logical port and the DoIP logical port before the vehicle is delivered from the factory. In a post-delivery use phase, each time the first device is powered on or restarted, a third status flag (for example, security_mode_solidified whose DID is F15B) is obtained from a memory, and the CAN logical port and the DoIP logical port are disabled based on the third status flag.

The following describes in detail a detailed process of dynamically configuring a CAN logical port and a DoIP logical port in a 4S shop repair phase and a return-to-factory repair phase after a vehicle is delivered from a factory with reference to FIG. 8 and FIG. 9.

FIG. 8 is a schematic flowchart of logical port configuration interaction in a 4S shop repair scenario according to an embodiment of this application.

S801: A diagnosis device sends a connection request to a first device.

Specifically, the connection request is used to request to connect the diagnosis device to the first device through a DoIP logical port.

S802: After the connection times out, the diagnosis device sends a first authentication request to the first device.

It should be understood that the first authentication request is used to request identity authentication through an authentication logical port.

For example, the authentication request may be TLS-based two-way authentication.

S803: After the authentication succeeds, the first device controls, based on authentication success information, the DoIP logical port to switch from a disabled state to an enabled state.

Optionally, before enabling the DoIP logical port of the first device, the diagnosis device may read a vehicle parameter that meets a regulation requirement.

S804: The first device sends an authentication success message to the diagnosis device.

It should be understood that there is no fixed sequence between S803 and S804.

S805: The diagnosis device successfully connects to the first device through the DoIP logical port, and maintain the connection to the first device.

S806: The diagnosis device sends a diagnosis request to the first device through the DoIP logical port.

S807: The first device sends a diagnosis response to the diagnosis device through the DoIP logical port.

In the foregoing technical solution, when a vehicle needs to be repaired in a 4S shop after delivery from a factory, if the authentication logical port authenticates the authentication request initiated by the diagnosis device, the first device may enable the DoIP logical port. An enabled/disabled state of the DoIP logical port is configured through the authentication logical port, to prevent an unauthorized device from enabling the DoIP logical port. In this way, the DoIP logical port can be conditionally enabled in the 4S shop repair scenario, so that security of the OBD port is ensured.

FIG. 9 is a schematic flowchart of logical port configuration in a return-to-factory repair scenario according to an embodiment of this application.

S910: Perform identity authentication between a server and a diagnosis device.

For example, TLS-based two-way authentication may be performed between the server and the diagnosis device.

S920: The diagnosis device obtains a VIN of a target vehicle.

It should be understood that the target vehicle is a vehicle in which a first device is located.

S930: The diagnosis device sends a first request message to the server, where the first request message is used to request a diagnosis authorization file.

The first request message includes the VIN of the target vehicle.

S940: The server sends the diagnosis authorization file to the diagnosis device.

S950: Enable a DoIP logical port through an authentication logical port. Specifically, S951 and S952 may be included.

S951: The diagnosis device sends a first authentication request to the first device, where the first authentication request is used for identity authentication.

S952: After the authentication by the authentication logical port succeeds, the first device enables the DoIP logical port.

It should be understood that a detailed process is similar to that in the 4S shop repair scenario. For details, refer to S801 to S805.

S960: Enable the DoIP logical port and a CAN logical port by using the diagnosis authorization file. Specifically, S961 and S962 may be included.

S961: The diagnosis device imports the diagnosis authorization file into the first device.

S962: The first device configures enabled/disabled states of the CAN logical port and the DoIP logical port based on the diagnosis authorization file.

For a specific configuration process, refer to steps S701 to S705 shown in FIG. 7 on a production line of the vehicle.

S970: The diagnosis device and the first device perform a diagnostic service.

S980: After the diagnostic service ends, the diagnosis device and the first device deregister the diagnosis authorization file.

It should be understood that, for a specific manner of deregistering the diagnosis authorization file, reference may be made to steps S650 and S660 shown in FIG. 6 in which the vehicle is on the production line.

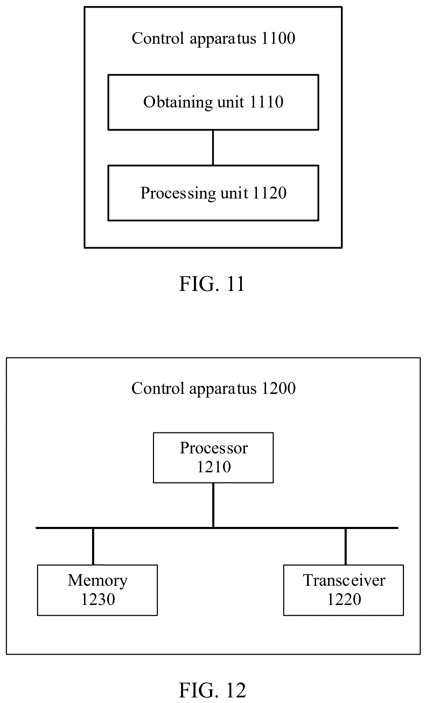

The foregoing content is the control method in embodiments of this application. The following describes the control apparatus in detail with reference to FIG. 11 and FIG. 12. It should be understood that descriptions of apparatus embodiments correspond to the descriptions of the method embodiments. Therefore, for content that is not described in detail, refer to the foregoing method embodiments. For brevity, details are not described herein again.

An embodiment of this application further provides an apparatus configured to implement any one of the foregoing methods. For example, an apparatus is provided, including units (or means) configured to implement steps performed by a transportation means or an on-board diagnostics in any one of the foregoing methods.

FIG. 11 is a block diagram of a control apparatus 1100 according to an embodiment of this application.

The control apparatus 1100 includes an obtaining unit 1110 and a processing unit 1120. The control apparatus 1100 may be configured to implement any one of the methods in FIG. 3 to FIG. 9.

The apparatus 1100 is applied to a diagnosis system of a transportation means. The diagnosis system includes a first logical port and a second logical port. The first logical port is a logical port of a first network of the transportation means, and the second logical port is a logical port of a second network of the transportation means. Specifically, the following steps may be performed.

The obtaining unit 1110 is configured to obtain first configuration information.

The processing unit 1120 is configured to control an enabled/disabled state of the first logical port and/or an enabled/disabled state of the second logical port based on the first configuration information.

To avoid repetition, for detailed steps, refer to corresponding method embodiments. The control apparatus 1100 may be the first device in FIG. 5 to FIG. 9, or a chip, a chip system, or a processor that supports the first device in implementing the corresponding method, or may be a logical module or software that can implement all or some functions of the first device.

It should be understood that division into the units of the foregoing apparatus is merely logical function division. During actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the unit in the apparatus may be implemented in a form of hardware circuit, and the functions of some or all of the units may be implemented through a design of the hardware circuit. The hardware circuit may be understood as one or more processors. For example, in an implementation, the hardware circuit is an application-specific integrated circuit (application-specific integrated circuit, ASIC), and functions of some or all of the units are implemented through a design of a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the foregoing units. All units of the foregoing apparatus may be implemented in a form of software invoked by the processor, or all units may be implemented in a form of hardware circuits, or a part of units may be implemented in a form of software invoked by the processor, and a remaining part may be implemented in a form of hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or a part of the units of the foregoing apparatus may be integrated, or may be implemented independently. In an implementation, these units are integrated together and implemented in a form of system-on-a-chip (system-on-a-chip, SOC). The SOC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

FIG. 12 is a block diagram of a structure of a control apparatus 1200 according to an embodiment of this application.

The control apparatus 1200 shown in FIG. 12 may include a processor 1210, a transceiver 1220, and a memory 1230. The processor 1210, the transceiver 1220, and the memory 1230 are connected through an internal connection path. The memory 1230 is configured to store instructions. The processor 1210 is configured to execute the instructions stored in the memory 1230, to enable the transceiver 1220 to receive/send some parameters. Optionally, the memory 1230 may be coupled to the processor 1210 through an interface, or may be integrated with the processor 1210.

It should be noted that the transceiver 1220 may include but is not limited to a transceiver apparatus like an input/output interface (input/output interface), to implement communication between the apparatus 1200 and another device or a communication network.

In an implementation process, the steps of the foregoing methods may be completed by using a hardware integrated logic circuit in the processor 1210 or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1230. The processor 1210 reads information in the memory 1230, and completes the steps of the foregoing method in combination with the hardware in the processor. To avoid repetition, details are not described herein again.

The processor 1210 may be a general-purpose CPU, a microprocessor, an ASIC, a GPU, or one or more integrated circuits, and is configured to execute a related program, to implement the control methods in the method embodiments of this application. The processor 1210 may alternatively be an integrated circuit chip and has a signal processing capability. In a specific implementation process, the steps of the control methods in this application may be completed by using a hardware integrated logic circuit in the processor 1210 or by using instructions in a form of software. The processor 1210 may alternatively be a general-purpose processor, a DSP, an ASIC, an FPGA, another programmable logic device, a discrete gate, a transistor logic device, or a discrete hardware component, and can implement or perform the methods, the steps, and logical block diagrams that are disclosed in embodiments of this application. The general-purpose processor may be a microprocessor, or the processor may alternatively be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1230. The processor 1210 reads information in the memory 1230, and performs the control methods in the method embodiments of this application in combination with hardware in the processor.

The memory 1230 may be a read-only memory (read-only memory, ROM), a static storage device, a dynamic storage device, or a random access memory (random access memory, RAM).

The transceiver 1220 uses, for example, but not limited to, a transceiver apparatus of a transceiver type, to implement communication between the apparatus 1200 and another device or a communication network.

An embodiment of this application further provides a control system. The system includes the control apparatus 1100, a diagnosis device, and a server.

An embodiment of this application further provides a transportation means. The transportation means may include the control apparatus 1100.

Optionally, the intelligent driving device may be a vehicle.

An embodiment of this application further provides a computer program product. The computer program product includes computer program code, and when the computer program code is run on a computer, the computer is enabled to perform the foregoing method.

An embodiment of this application further provides a computer-readable medium. The computer-readable medium stores program code, and when the computer program code is run on a computer, the computer is enabled to perform the foregoing method.

In an implementation process, steps of the foregoing methods may be implemented by using a hardware integrated logic circuit in the processor or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps of the foregoing methods in combination with hardware in the processor. To avoid repetition, details are not described herein again.

It should be understood that in this embodiment of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A control method, applied to a diagnosis system of a transportation means, wherein the diagnosis system comprises a first logical port and a second logical port, the first logical port is a logical port of a first network of the transportation means, the second logical port is a logical port of a second network of the transportation means, and the method comprises:
obtaining first configuration information; and
controlling an enabled/disabled state of the first logical port and/or an enabled/disabled state of the second logical port based on the first configuration information.

2. The method according to claim 1, wherein the first configuration information comprises a diagnosis authorization file, the diagnosis authorization file comprises a first field, and the obtaining the first configuration information comprises:
receiving the diagnosis authorization file; and
the controlling the enabled/disabled state of the first logical port and/or the enabled/disabled state of the second logical port based on the first configuration information comprises:
when the first field is a first value, controlling the first logical port and the second logical port to be in an enabled state; or
when the first field is a second value, controlling the first logical port and the second logical port to be in a disabled state.

3. The method according to claim 2, wherein the diagnosis authorization file further comprises a second field, and before the controlling the enabled/disabled state of the first logical port and/or the enabled/disabled state of the second logical port based on the first configuration information, the method further comprises:
determining, based on the second field, that the diagnosis authorization file is valid.

4. The method according to claim 1, wherein the first configuration information comprises a solidification flag, the solidification instruction comprises a third field, and the obtaining the first configuration information comprises:
obtaining the solidification flag after the transportation means is powered on; and
the controlling the enabled/disabled state of the first logical port and/or the enabled/disabled state of the second logical port based on the first configuration information comprises:
controlling, based on the third field, the first logical port and the second logical port to be in a disabled state.

5. The method according to claim 4, wherein the method further comprises:
storing the solidification flag after the transportation means is delivered from a factory.

6. The method according to claim 1, wherein the diagnosis system further comprises an authentication logical port, the first configuration information comprises a first authentication request, and the obtaining the first configuration information comprises:
receiving, through the authentication logical port, the first authentication request sent by an external diagnosis device, wherein the authentication logical port is used for identity authentication; and
the controlling the enabled/disabled state of the first logical port and/or the enabled/disabled state of the second logical port based on the first configuration information comprises:
when the external diagnosis device is successfully authenticated by using the first authentication request, controlling the second logical port to switch from a disabled state to an enabled state.

7. The method according to any one of claims 1 to 6, wherein the diagnosis system is an on-board diagnostics, the first network is a controller area network, the second network is an automotive Ethernet, the first logical port is a logical port of the controller area network, and the second logical port is a logical port of the automotive Ethernet.

8. A control apparatus, used in a diagnosis system of a transportation means, wherein the diagnosis system comprises a first logical port and a second logical port, the first logical port is a logical port of a first network of the transportation means, the second logical port is a logical port of a second network of the transportation means, and the apparatus comprises an obtaining unit and a processing unit;
the obtaining unit is configured to obtain first configuration information; and
the processing unit is configured to control an enabled/disabled state of the first logical port and/or an enabled/disabled state of the second logical port based on the first configuration information.

9. The apparatus according to claim 8, wherein the first configuration information comprises a diagnosis authorization file, and the diagnosis authorization file comprises a first field;
the obtaining unit is specifically configured to receive the diagnosis authorization file; and
the processing unit is specifically configured to:
when the first field is a first value, control the first logical port and the second logical port to be in an enabled state; or
when the first field is a second value, control the first logical port and the second logical port to be in a disabled state.

10. The apparatus according to claim 9, wherein the diagnosis authorization file further comprises a second field, and the processing unit is further configured to:
determine, based on the second field, that the diagnosis authorization file is valid.

11. The apparatus according to claim 8, wherein the first configuration information comprises a solidification flag, and the solidification instruction comprises a third field;
the obtaining unit is specifically configured to obtain the solidification flag after the transportation means is powered on; and
the processing unit is specifically configured to:
control, based on the third field, the first logical port and the second logical port to be in a disabled state.

12. The apparatus according to claim 11, wherein the apparatus further comprises a storage unit; and
after the transportation means is delivered from a factory, the storage unit is configured to store the solidification flag.

13. The apparatus according to claim 8, wherein the diagnosis system further comprises an authentication logical port, and the first configuration information comprises a first authentication request;
the obtaining unit is specifically configured to receive, through the authentication logical port, the first authentication request sent by an external diagnosis device, wherein the authentication logical port is used for identity authentication; and
the processing unit is specifically configured to:
when the external diagnosis device is successfully authenticated by using the first authentication request, control the second logical port to switch from a disabled state to an enabled state.

14. The apparatus according to any one of claims 8 to 13, wherein the diagnosis system is an on-board diagnostics, the first network is a controller area network, the second network is an automotive Ethernet, the first logical port is a logical port of the controller area network, and the second logical port is a logical port of the automotive Ethernet.

15. A control apparatus, comprising:
a memory, configured to store a computer program; and
a processor, configured to execute the computer program stored in the memory, to enable the apparatus to perform the method according to any one of claims 1 to 7.

16. A transportation means, comprising the control apparatus according to any one of claims 8 to 15.

17. A computer-readable storage medium, wherein the computer-readable storage medium stores a computer program, and when the computer program is executed by a computer, the method according to any one of claims 1 to 7 is implemented.
